# EUROPEAN PATENT SPECIFICATION

(11) **EP 2 961 260 B1**
(45) Date of publication and mention of the grant of the patent: **04.04.2018**
(21) Application number: 14756770.5
(22) Date of filing: 18.02.2014
(51) Int. Cl.: A01G 23/083, A01G 23/08

(54) **A SYSTEM FOR THE PROCESSING AND TRANSPORT OF FORESTRY MATERIAL AND A TERRAIN-GOING VEHICLE COMBINATION WITH A CRANE**
SYSTEM ZUR VERARBEITUNG UND ZUM TRANSPORT VON FORSTWIRTSCHAFTSMATERIAL UND KOMBINATION AUS GELÄNDEFAHRZEUG UND KRAN
SYSTEME DE TRAITEMENT ET DE TRANSPORT DE MATERIAU D'EXPLOITATION FORESTIERE ET ENSEMBLE DE VEHICULES DE TERRAIN COMPORTANT UNE GRUE

(30) Priority: 26.02.2013 SE 1350220
(43) Date of publication of application: 06.01.2016
(73) Proprietor: JLO Development AB, 903 21 Umeå (SE)
(72) Inventor: OLOFSSON, Lennart, 903 30 Umeå (SE); LINDBERG, Erik, 915 98 Bygdeå (SE)
(74) Representative: Zacco Sweden AB
(86) International application number: PCT/SE2014/050193
(87) International publication number: WO 2014/133435

(56) References cited:
- WO-A1-2008/097146
- WO-A1-2008/097146
- CA-C- 2 376 461
- CA-C- 2 376 461
- SU-A1- 502 625
- SU-A1- 502 625
- SU-A1- 1 132 857
- SU-A1- 1 132 857
- SU-A1- 1 246 944
- SU-A1- 1 246 944
- US-A- 3 886 985
- US-B1- 6 360 166
- US-B1- 6 360 166

## Description

The present invention concerns a system for the processing and transport of forestry material according to the introduction to claim 1, a vehicle combination intended to be used in the forestry system according to the introduction to claim 7, and a method for a forestry system according to the introduction to claim 12.

From CA2376461 is known a forest machine having a first and second vehicle chassis fitted with a lifting crane.

When harvesting forest, felling trees and thinning, a number of different working machines that are mobile in terrain are normally used. During logging, which is the felling of trees at the root followed by trimming of the trunks, working machines known as "harvesters" or "thinners" are used, which working machines have a mobile crane arm that is equipped at its free end with a harvester unit or harvester head. The tree trunks that are sawn in this way are collected by a vehicle, known as a "forwarder", that can be driven and that is equipped with a loader, which vehicle has a mobile arm with a timber gripper at its free end. Forestry material is transported with the aid of the forwarder to a collection site reserved for this purpose in connection with a forest road along which a lorry can be driven.

It can generally be said that a desire exists to make forestry more efficient and that as part of this a number of new working machines, known as "combination machines", have been developed in recent times. These machines have ever-broader fields of use and greater flexibility. In this respect, it is now not unusual to have not only working machines that unite the logging and cross-cutting steps, i.e. the steps of felling and trimming, together with division of the tree trunk into parts of a determined length, but also working machines that are equipped with a load compartment that makes possible the transport of the sawn tree trunks to the designated collection site. In other words: these combination machines function both as harvester and as forwarder. One example of such a machine is that known as a "harwarder", which is provided with a load compartment that can be rotated and tilted and whose position can be adapted in such a manner that the logs that have been cut into lengths in the harvester head can be directly transferred to the load compartment, or, alternatively, logs laying on the ground can be lifted into the load compartment by means of the relatively simple timber gripper with which the harvester head is equipped. The driver normally sits in these machines facing forwards in the direction of travel of the forestry machine during harvesting. Most of the harvesting work takes place with the harvester unit within a working area that is, in practice, located at a certain radial distance out from the harvester, immediately in front of the harvester or only somewhat to the side of it. The harvesting work is normally carried out at a radial distance out from the forestry machine that has been selected such that the operator can, by operation of the crane, meet and capture a falling tree in a safe manner when the tree pivots from its vertical rooted position to a lying horizontal position in which processing of the tree takes place. In order to carry out this manoeuvre with the crane, a certain free space is, of course, required, the extent of which is assessed by an experienced operator from case to case, based on, for example, the thickness and height of the tree in question.

One disadvantage with forestry harvesters of this type is their limited capacity, in particular with respect to the harvester unit that, when regarded as a unit, is relatively expensive, and in that these machines are used not only for the logging and cross-cutting stage (felling, trimming, and cutting to pre-determined lengths), but also, with the aid of the simple timber gripper of the harvester unit, for loading of the felled forestry material onto the mobile load carrier of the working machine. A further disadvantage with these prior art combination machines is their limited transport capacity for sawn timber, which means that the working machine cannot travel very far before it must return to the collection site, timber store, at a road in order to unload the load. Thus, this means that a large part of the operating time of the working machines, where the harvester unit itself constitutes a significant part of the total cost of the machine, is used for the transport of timber back to the collection site, whereby the tree harvester is inoperative and is not producing timber as a result of this. In addition to the expensive inoperative condition of the harvester unit, the frequent transport operations of sawn timber to and fro between the collection site and the felling area have a negative impact on the environment. The harvester unit is manoeuvred into its working position by being displaced not only by means of the crane, but also by means of the machine. The harvester unit has a practical working area during tree felling that with respect to the longitudinal axis of the machine extends around the arc of a circle with an arc length of approximately 180°, in an area in front of and to the side of the machine. As has been mentioned above, the "practical working area" denotes the region within which the operator assesses it to be appropriate and safe to place the harvester unit relative to the forestry machine in order to meet and capture a falling tree with the crane.

The transport of harvested forestry material is characterised by the exchange of the transport means while the amount of timber increases, whereby the sawn timber that has been placed at a collection site and timber store is transferred to a lorry for onwards transport on the public roads network to a consumer of the raw materials, such as a sawmill. There has long been a desire within the forestry industry to be able to make forestry more efficient with respect to not only the work of harvesting at the felling site, but also the transport and management of felled forestry material to the designated collection site, such that the total costs for each cubic metre of forestry material produced from the felling site to the final consumer can be reduced. In the latter case, there is a desire also to make it possible to sort felled forestry material and timber according to quality and dimension as early as the felling site, and in addition to take care of secondary and waste products of tops and branches, which are normally used as raw material for the production of biofuel, as early as the felling site.

A first purpose of the present invention is therefore to provide a system for the processing and transport of harvested forestry material that makes it possible to realise these desires for increases in total efficiency. A second purpose of the present invention is to achieve a terrain-going working machine or vehicle combination provided with a crane intended to be used in the forestry system according to the invention. A third purpose of the invention is to provide a method for more efficient processing and transport of harvested forestry material.

These purposes of the invention are achieved with a forestry system that demonstrates the distinctive features and characteristics specified in claim 1, and a method with the distinctive features specified in claim 7. Due to the harvester system for a forest harvester according to the invention, the number of displacements in order to achieve tree felling and the placing of the trees in the load carrier using the expensive harvester unit will become considerably lower than previously, which means that the degree of exploitation of the said forest harvester can be considerably improved. Furthermore, the advantage is obtained that it is not necessary to store the timber on the ground, due to the direct-loading system of the invention. The loading procedure can, in addition, be carried out in a single step, in which the timber-receiving unit of the loading arrangement that is a component of the vehicle combination can be driven to the immediate or close vicinity of the practical working area of the harvester unit during tree felling, and from there to a mobile load compartment independently of the harvester unit. This contributes, not least, to significantly increasing the availability of the harvester unit of the forestry machine.

Through the vehicle combination in one execution using first and second independent units, the harvester system can, in particular in the case in which the second independent unit includes two trailers that can be driven independently of each other, continue to work without interruption for either loading or transport until, while one trailer can transport harvested tree trunks to a collection site that has a timber store while a new trailer can continue the work by being connected to the first vehicle (the harvester) and the harvester system can continue its work harvesting the forest. In the cases in which the independent second unit includes several independent trailers that can be driven, equipping the trailers in different ways can be conceived, in order to receive felled forestry material on site, sorted according to quality, with respect to not only timber but also secondary products and waste products obtained during the tree felling.

In addition to the advantage that the degree of exploitation of the harvester head can be increased, fuel consumption and thus also exhaust gas emissions are reduced through the lower number of displacements in the terrain that are required that are required in order to process the harvested forestry material from the felling site to the final consumer.

One particularly interesting distinctive feature of the present invention is that it is the timber-receiving unit that is brought forward to the harvester unit, when this is located having been manoeuvred into a working position in the practical working area, and that the said timber-receiving unit is moved away from the working area, after the reception of timber, for the delivery of timber to the mobile load compartment. As a consequence of this, the harvester unit itself never needs to carry timber with its trivial timber gripper, nor does it need to leave the practical working area at any time, which contributes to the efficiency of the present mobile loading system. Thus, the harvester unit can be active in harvesting within its working area, without needing to carry out unnecessary displacements that are related to anything other than harvesting.

Both the forestry system and the vehicle combination will be described below in more detail under the guidance of embodiments and with reference to attached drawings, of which:

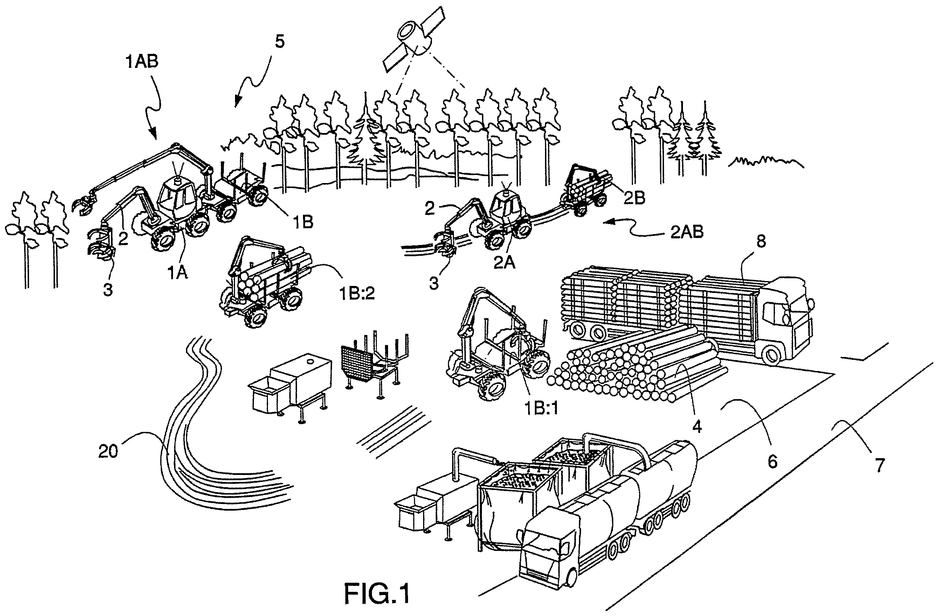

Figure 1 shows generally a view of a working area for tree felling and the processing of forestry material, which includes a forestry system according to the present invention,

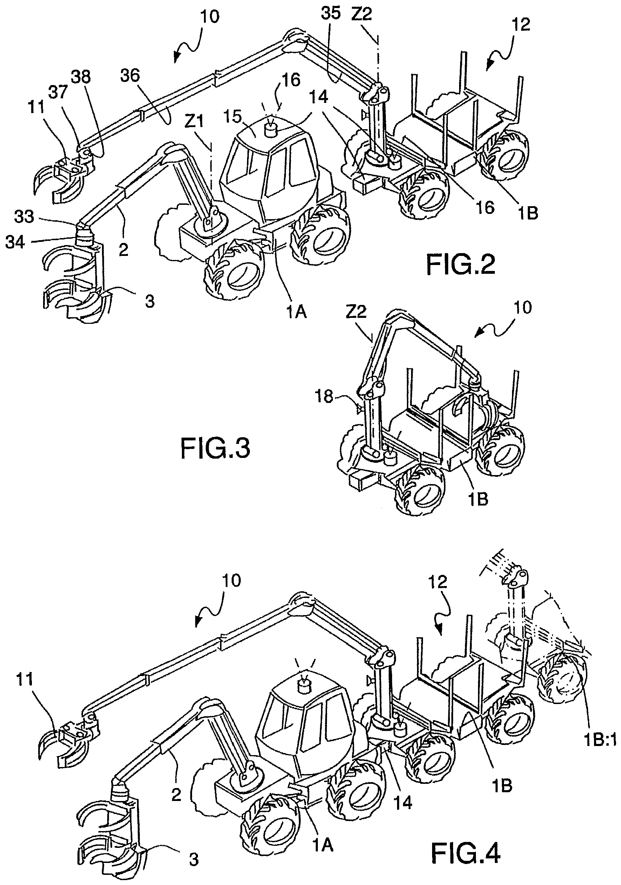

Figure 2 shows a perspective view of a vehicle combination that can be driven in terrain and that is intended to be used for the forestry system according to the present invention and in which view a first and a second vehicle that are components of the vehicle combination are present in an uncoupled condition,
Figure 3 shows a perspective view of the second vehicle that is shown in Figure 2 and that is a component of the vehicle combination,
Figure 4 shows a perspective view of the vehicle combination shown in Figure 2 with the first and second vehicles present in a coupled condition, and where a further second vehicle is connected behind the said vehicle combination,

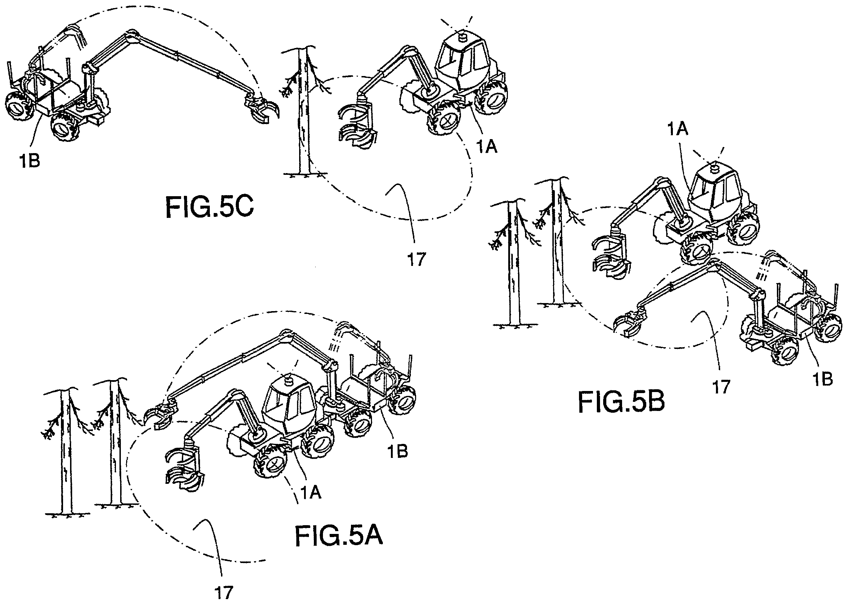

Figures 5A-5C show perspective views with the second vehicle that that is a component of the vehicle combination in different positions relative to the first vehicle and the harvester unit in order to efficiently collect and transfer the timber to the load compartment, whereby the second vehicle is located behind the first vehicle in Figure 5A, the second vehicle is located by the side of the first vehicle in Figure 5B, and the second vehicle is located in front of the first vehicle in Figure 5C,

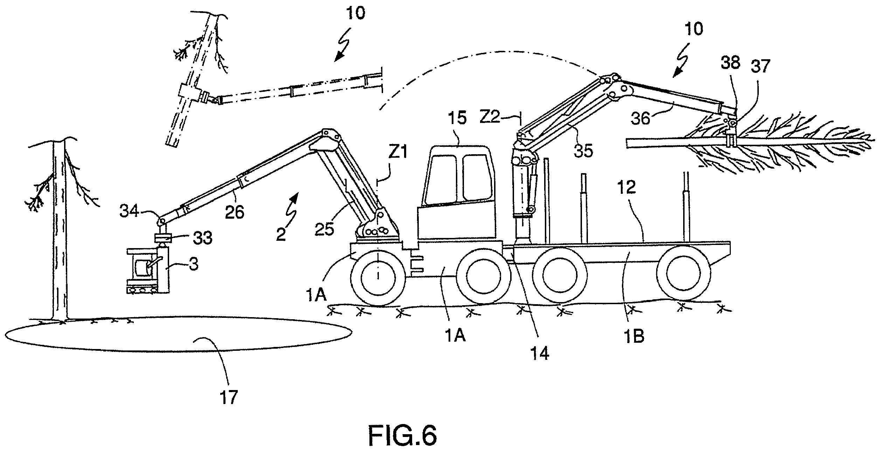

Figure 6 shows a side view of a first vehicle that is a component of the vehicle combination in the process of felling trees and cross-cutting these to logs, and a second vehicle trailing behind the first vehicle uses a timber gripper as a timber-receiving unit in order to meet and receive timber from the harvester unit directly from a sector of a circle of a working area for the harvester unit in front of the first vehicle,

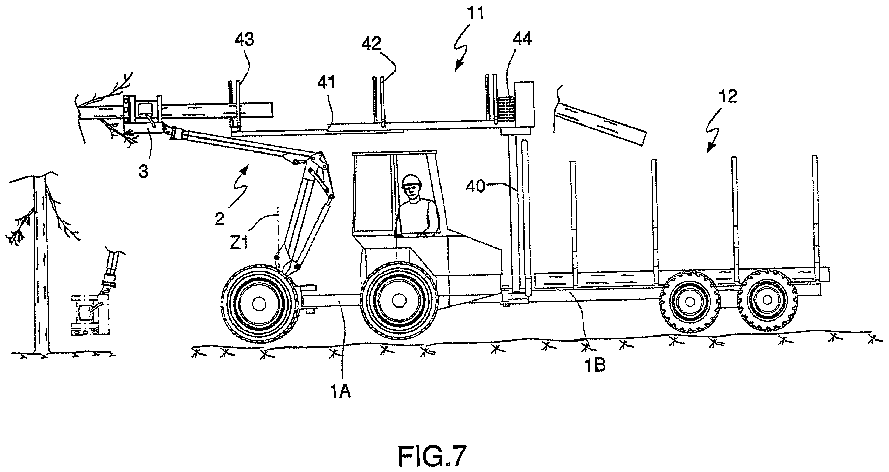

Figure 7 shows a side view of a loading arrangement in an alternative execution that can be a component of the second vehicle and which arrangement is intended to receive and retain a log directly from working area of the harvester unit in front of the harvester and, independently of the motion of the harvester unit, carry out displacement of a delivered log to a position in and above the load compartment of the said second vehicle.

A working machine that can be driven in terrain is denoted in Figure 1 by 1AB, a forestry machine that carries out what is known as logging and cross-cutting, i.e. the felling of a tree trunk standing on its root, the trimming of the tree trunk and the subsequent division of the tree trunk into pre-determined lengths to form timber. Each one of the said forestry machines 1AB, 2AB is equipped for this purpose with a mobile crane arm 2 that is equipped at its free end with a harvester unit 3 for the felling and cross-cutting of trees. The tree trunks that are sawn after cross-cutting are intended to be placed in piles at a timber store 4. A felling site for the harvesting of forest is generally denoted by reference number 5. A central area for the storage of timber is generally denoted by reference number 6. This area has been located in connection with a road 7, for example a forest road, along which a lorry 8 intended for the transport of timber can drive.

In accordance with the principles of the invention, each forestry machine 1AB, 2AB shown in Figure 1 constitutes a vehicle combination with a first vehicle 1A that can be driven and that is equipped on a wheeled chassis with the said mobile crane arm 2 and the said harvester unit 3 at the free end of this arm, together with a second vehicle 1B that supports on a wheeled chassis not only a crane 10 arranged to be mobile and that supports at its free end a means for the reception and processing of timber 11, but also a load compartment 12 for the transport of tree trunks. The vehicle combination comprises furthermore coupling means 14 with which the second vehicle 1B can be coupled to the first vehicle 1A. The expression "coupling means" includes in this case not only mechanical coupling but also electronic coupling that allows the transfer of signals and data. The first vehicle 1A is equipped with a driver's cabin 15 for an operator while the second vehicle 1B forms a type of follower vehicle that is characterised by demonstrating the lack of a driver's cabin, and that is intended to be controlled and monitored through a communication link 16 that is a component of the coupling means 14 by the operator who is present in the driver's cabin 15 of the first vehicle 1A, or to be controlled remotely from another appropriate location.

The timber-receiving unit 11 of the second vehicle 1B is intended to receive and to retain directly from the harvester unit 3 a sawn log and, independently of the motion of the harvester unit, carry out displacement using its own crane 10 of a log that has been delivered from the harvester unit 3, to a position in and over the load compartment 12. Due to the mobile crane 10 of the loading arrangement, the timber-receiving unit 11, for example in the form of a timber gripper or a simple extended collection means such as a basket, channel or similar, timber is directly received as it is delivered from the harvester unit 3. With the aid of the crane 10 the timber-receiving unit 11 can be manoeuvred to a freely chosen position in the close vicinity of the working area 17 of the harvester unit 3 for the efficient reception of timber. In other words, the timber-receiving unit 11 can be set by means of the crane 10 at a desired position within the working area 17 of the harvester unit 3, i.e. not only in front of but also to the side of the first vehicle 1A, in order to receive timber in as efficient a manner as possible, see also Figures 5A-5C. The term "practical working area" generally denotes, in the following, the sector within which it is practically possible to carry out tree felling. The harvesting work is normally carried out within a practical working area at a radial distance from the forestry machine that has been selected such that the operator can, by operation of the crane, meet and capture a falling tree in a safe manner when the tree pivots from its vertical rooted position to a lying horizontal position in which processing of the tree takes place.

The first vehicle 1A that is a component of the vehicle combination essentially forms a harvester for felling, while the second vehicle 1B forms a forwarder for the management and transport of timber. The working area 17 of the harvester unit 3 is constituted by the practical working sector of the harvester unit, which normally extends approximately 180° in front of and at the side of the machine, with respect to the longitudinal axis of the machine.

In one embodiment of the invention the coupling means 14 may be purely mechanical and in the form of a conventional jointed connection such that the second vehicle 1B as a trailer or a follower vehicle can be drawn after the first vehicle 1A to and from a felling site 5. In another embodiment of the invention the coupling means 14 may form part of a communication link 16 for the wireless transfer of data between control means used by the operator in the driver's cabin 15 in the first vehicle and a control computer in the second vehicle 1B. The second vehicle 1B, in this latter execution, can be driven, and it is equipped with the driving and control arrangements required for this purpose. This type of forestry machine has a source of power that is typically constituted by a diesel engine with a mechanical hydrostatically operating power-transfer system from the engine to the driving wheels. The source of power may, of course, be electrical, in an alternative execution.

The coupling means 14 is so designed in one execution that the second vehicle 1B can be mechanically released from the first vehicle 1A and can travel independently of the said first vehicle, whereby the motion of the second vehicle 1B with respect not only to the geographical position of the vehicle (see Figures 5A-5C) but also to the position of the timber-receiving unit 11 relative to the harvester unit 3 can be varied. The relative position between the second vehicle 1B and the working area 17 of the harvester unit 3 can be remotely controlled by the operator of the first vehicle 1A. In the said latter operating condition, the second vehicle can form a follower vehicle that, as a sort of "forwarder pet" can follow the first vehicle 1A at a determined distance when it is driven or when it travels, at, for example, the felling site. The second vehicle 1B can thus be driven independently of the first vehicle 1A and consequently it can be also freely manoeuvred relative to the first vehicle. It can, for example, be positioned in front of this vehicle when seen in the normal direction of travel, or parallel with it, or, alternatively, in another suitable position, such that it is in the desired position close to the working area of the harvester unit 3 that the first vehicle 1A carries at the end of its crane.

Different relative positions of the two vehicles that are components of the vehicle combination 1AB are illustrated in Figures 5A-5C during harvesting, whereby the second vehicle 1B is located behind the first vehicle 1A in Figure 5A, the second vehicle 1B is located beside the first vehicle 1A in Figure 5B, and the second vehicle 1B is in front of the first vehicle 1A in Figure 5C. It is conceivable that the second vehicle 1B be equipped in different ways for the reception of felled forestry material sorted according to quality, not only with respect to timber of different qualities but also with respect to secondary products and waste products obtained from the tree felling. It would be possible in one execution for the second vehicle 1B to acquire increased flexibility by it being designed with a standard chassis that can support in an exchangeable manner a number of different loading-bed cassettes, in which each such loading-bed cassette is designed to receive, support and possibly also process different types of felled forestry material. Figure 1 shows a number of such loading-bed cassettes at the central storage area 6, standing on a number of support legs that that are components of each loading-bed cassette. Such a loading-bed cassette for the reception of tops and branches would be equipped with a fragmentation unit for the fragmentation of secondary and waste products to chips, and a storage compartment for the said chips arranged in association with this unit.

With reference also to Figures 2-4, the first vehicle 1A that is a component of the vehicle combination 1AB has a wheeled chassis that comprises, in addition to the driver's cabin 15, crane arm 2 and harvester unit 3, the different types of control means in the form of joysticks, contact units and controls that are necessary for the required operation of the crane arm and harvester unit. Equipment is also present in the driver's cabin 15 that makes it possible to control the second vehicle 1B remotely, when it has been mechanical released. The electronic control equipment may be localised directly at the driver's cabin 15 and it may include a remote control station with its associated computer. The communication can take place over wireless communication links and protocols, such as Bluetooth, or over radio links when a greater range is required. Information is transferred over the wireless connection 16 to the second vehicle 1B over the remote control equipment that has been arranged in the first vehicle 1A. The second vehicle 1B can, with the aid of the remote control, transmit to the remote control equipment video data, in the form of video streams from one or several video cameras 18 arranged at the second vehicle 1B. These video streams are presented to the operator on one or several displays in the driver's cabin 15, whereby the operator can control the second vehicle 1B using these displays. It is preferable that also other data that is necessary to control and monitor the second vehicle 1B in a suitable manner, such as speed, angular positions, etc., is sent.

In an alternative execution of the invention, the second vehicle combination 1B in the vehicle combination 1AB, can, in a released condition, form an independent vehicle that follows the first vehicle 1A, whereby not only each one of the two vehicles that are components of the vehicle combination are equipped with a computer-supported reception and processing arrangement that uses a satellite-based positioning system GPS. A transmitter is arranged in the first vehicle 1A that transmits at regular interval information about its position to a receiver in the second vehicle 1B, which compares in a computer this position with its own position and calculates the distance and direction to the first vehicle 1A such that the second vehicle 1B moves continuously at a determined distance after, or at a freely chosen position behind, or in the close vicinity of, the first vehicle.

In another embodiment of the invention, the second vehicle 1B can, in a released condition, be driven a determined distance with a load of timber from a felling site 5 to a timber store 4, for example in connection with a forest road 7, at which store the said load of timber is intended to be delivered. The coordinates of points along the route 20 that the second vehicle 1B travels as it accompanies the first vehicle 1A to the current felling site 5 are read in this execution. The starting point may be constituted by, for example, the said timber store 4 at the collection area 6, and the ending point by the current felling site 5 in the forest. In association with the vehicle combination being driven from the timber store 4, the computer of the second vehicle 1B that is a component of the positioning system receives positional data at regular intervals, for example once a second, and stores these values as a data sequence in a computer memory. When the vehicle combination is located at the current felling site 5 in the forest, the second vehicle 1B has read in the coordinates of points along the route with a freely chosen, and small, separation. In order to drive this route automatically in the reverse direction back to the timber store 4 with a load of timber in the load compartment 12, the second vehicle 1B initially receives a positioning signal, which the vehicle computer compares with the starting point of the route, which has been programmed into the computer. If these two positions are not the same, the direction and distance to the starting point is calculated, whereby the control arrangement of the second vehicle 1B ensures that the vehicle drives to the starting point. While the second vehicle 1B with its load of timber drives towards the timber store 4, data about the current position are received from the positioning system at pre-determined intervals, and these data are compared with data for the next position that has been read in along the route. The direction and distance to the prescribed position is calculated point-for-point, and the driving arrangement and control of the second vehicle 1B ensure that the pre-programmed route 16 back to the store is followed. Driving from the timber store 4 to the felling site 5 takes place in an inverse manner.

As is shown in Figure 4, it can be conceived that a vehicle combination 1AB according to the invention include more than a single second follower vehicle 1B, i.e. a quantity of "n" second follower vehicles 1B:1-1B:n in order in this way to increase the total efficiency of the forestry machines, in particular the degree of exploitation of the harvester unit by allowing two or more second vehicles 1B that are components of a vehicle combination collect and deliver loads of timber in an alternating manner by moving in a cyclic manner to and fro between the felling site 5 and the timber store 4. Thus, loads of timber can be transported with the forestry system according to the invention between the felling site and the timber store without the need for any person to be involved. It can, of course, be conceived that the second vehicle 1B in a driverless execution can be equipped with some form of sensor that detects the presence of obstacles along the route and ensures that the vehicle stops and waits in a standby mode until the obstacle has disappeared. Such a sensor may be of a type that uses radar, ultrasound or infrared radiation.

In order to illustrate what has been described above, Figure 1 shows an example of a second vehicle denoted 1B:1 that is located at the central unloading area 6 and whose load of timber has been unloaded and placed onto the timber store 4. Unloading of timber from the second vehicle at the collection site can take place in a number of different ways, for example by a timber lorry or with the timber handling arrangement 10 and 11 of the second vehicle itself with the operator in the first vehicle 1A and using the video cameras 18 that are components of the remote control equipment and are arranged at the second vehicle 1B. A further second vehicle denoted 1B:2 is shown in Figure 1 whose load compartment 12 carries a load of timber, which vehicle is moving from a felling site 5 following coordinates for points along a route 20 in the computer of the vehicle.

As is shown in Figures 2-4, there is arranged on the chassis of the first vehicle 1A a crane 2 that can be rotated around a vertical axis Z1. The crane 2 includes a lifting boom 25 at whose free end an outer boom 26 formed from sections that move telescopically is arranged, united in a jointed manner. The outer boom 26 carries the harvester unit 3 at its free end. A rotator 33 and the required tilt arrangement 34 are arranged between the free end of the outer boom 26 and the harvester unit 3, such that the harvester unit can carry out the necessary operations, and a desired pattern of motion, similar to that of a wrist joint. The harvester unit 3 comprises in known manner trimmers, feed rollers and a saw arrangement. The harvester unit 3 is displaced between trees with the aid of the crane 2 and the vehicle 1A. The relative motion between the telescopic parts that are included in the boom structure of the outer boom 26 is carried out by cylinders that provide force in the outer boom and that are activated by a pressurised medium. The range required is achieved due to the fact that the complete outer boom 26 is arranged to function telescopically. In a similar manner, a crane 10 that can be rotated around a vertical axis Z2 is arranged at the chassis of the second vehicle 1B. The crane 10 includes a lifting boom 35 to which an outer boom 36 formed from sections that move telescopically is arranged, united in a jointed manner. The outer boom 36 carries the timber-receiving unit 11 at its free end. A rotator 37 and the required tilt arrangement 38 are arranged between the free end of the outer boom 36 and the timber-receiving unit 11, such that the timber-receiving unit can carry out the necessary operations, and a desired pattern of motion, similar to that of a wrist joint. The relative motion between the parts that are included in the boom structure is carried out by cylinders that provide force in the outer boom and that are activated by a pressurised medium. Due to the fact that the complete outer boom 36 is arranged to function telescopically, such a range is obtained that even in the case in which the second vehicle 1B is mechanically coupled as a trailer after the first vehicle 1A, the outer boom can be given such a length that the timber-receiving unit 11 reaches at all positions into the working area 17 of the harvester unit 3, for an efficient and direct reception of timber.

According to the invention, there is arranged at the load compartment 12 of the second vehicle 1B that is a component of the vehicle combination 1AB a loading arrangement that includes a crane 10, which arrangement is designed to carry out loading of logs to the load compartment by means of a timber-receiving unit 11, which logs have been collected with the aid of the mobility and range of the crane from a working position in a sector of a circle of the working area 17 of the harvester unit in front of or at the side of the first vehicle. Thus, with the aid of the crane 10 the timber-receiving unit 11 can be manoeuvred to a freely chosen position in the close vicinity of the working area 17 of the harvester unit 3 for efficient reception of timber. The timber-receiving unit 11 has been designed such that it can directly receive and carry timber in a retaining manner as cut lengths that have been delivered from the harvester unit 3. The loading system with the crane 10 and the timber-receiving unit 11 can be operated manually or automatically from the driver's cabin 15, using control means. The technology of operating hydraulically driven machines such that they follow a pre-determined pattern of motion through a control program and mathematical curves, i.e. as a robot, has been known for a long time. It is normal that the standardised CAN-system (where "CAN" is an acronym for "Controller Area Network") is used, which system is computer-based and uses an electrical control and monitoring system with a low-level protocol for nodes and modules, whereby communication between the units that are components of the hydraulic system takes place over bus-based connections. Since this technology for programmable hydraulic operation is well known, it will not be described in detail. In practice, the timber-receiving unit 11 carrying a load of timber, can, with the aid of the said CAN technology on activation by, for example, the operator pressing a button in the driver's cabin 15, be caused to move from a freely chosen collection position in the working area 17 of the harvester unit to a programmed base or delivery position in the load compartment 12 for the delivery of the load of timber.

Figure 6 shows in more detail how the loading system makes it possible to receive and transfer a felled tree from a harvester unit 3, using a timber-receiving unit 11 in the form of a conventional timber gripper. The timber is received at a collection position within a working area 17 in front of the harvester and it is transferred along a pathway over the harvester to a delivery position above the load compartment 12. In other words, the transfer can take place without deviating in a sideways direction from a pathway that is parallel to the longitudinal axis of the vehicle combination 1AB, and that is essentially constrained within the transverse extent of it. The crane 10 of the loading arrangement can rotate in a horizontal plane around a vertical axis Z2. The crane 10 can rotate around a full circle, i.e. it demonstrates an angular rotation that amounts to 360°, which means that the crane and its tip reach positions located in a working zone 17 immediately in front of the first vehicle 1A, positions above the first vehicle 1A, and positions above the load carrier 12. Although the timber-receiving unit 11 is illustrated in the drawings as a timber gripper, it should be understood that it should be possible that the receiver be constituted by an extended collection means such as a basket or similar that meets the harvester unit 3 and receives timber from it within a sector of a circle of a working area 17 in front of the first vehicle 1A. As the logs are sawn off at the desired lengths and fed out from the harvester unit 3, they are collected in the basket-like collection means placed within the working area 17. The timber-receiving unit 11 is placed at the desired location within the working area 17 of the harvester unit 3 in front of the first vehicle 1A with the aid of the crane 10. The logs that have been collected in the timber-receiving unit 11 can, by operation of the crane 10, be transferred, either individually or several at one time, to a position above the load carrier 12, at which position they are released or tipped down.

The loading arrangement is shown in Figure 7 in an alternative design whereby the crane that is a component of the arrangement described above has been replaced by a vertical frame 40 that is placed at a forward gable end of the truck and that supports a track 41 with a length of protrusion that can be changed telescopically. The track 41 that forms a type of timber-receiving unit 11 extends in a horizontal plane in the normal direction of travel of the vehicle forwards above the cabin 15 and reaches, at least when in its extended condition, essentially into the working area 17 of the harvester unit. A number of compressive stakes 42 are arranged in pairs on both sides of the track 41, which pairs of stakes are evenly distributed along the length of the track. A timber gripper 43 is located at the farthest end of the track and there are arranged pairwise operating feeder rollers 44 at the rear end, the end that faces the load carrier 12 of the track, with the aid of which rollers the timber is fed along its longitudinal direction and thus also along the longitudinal direction of the harvester down into the load carrier 12. The harvester unit 3 and a tree that has been placed into it are manoeuvred with the aid of the crane 2 to the desired location in connection with the loading arrangement such that logs are fed up onto the track 41 as they are sawn off into the desired lengths. Through interaction between the timber gripper 43, the track 41 that has been pushed together, and the rollers 44, the logs are fed along the longitudinal axis of the vehicle down into the load compartment 12.

The present invention is not limited to that which has been described above and shown in the drawings: it can be changed and modified in several different ways within the scope of the innovative concept defined by the attached patent claims.

## Claims

1. A system for the processing and transport of forestry material such as tree trunks by means of vehicles (1A, 1B) such as forestry machines that can be driven in terrain and where the material after harvesting, which includes the felling and cross-cutting of trees standing on roots, is intended to be transported without intermediate steps from the felling site (5) to a central storage area (6) at which the forestry material is intended to be delivered into a timber store (4) located in connection with a road for its onwards transport with, for example, lorries to consumers, wherein the system includes a vehicle combination consisting of:
a) a first vehicle (1A) that can be driven and that is equipped with a driver's cabin (15) and that supports a harvester unit (3) at a free end of a first crane arm (2) that is arranged to be displaceable, which harvester unit can, through manoeuvring of the first crane arm (2), carry out harvesting within a practical working area (17) of a defined working sector during the felling of trees,
b) a second vehicle (1B) that demonstrates a lack of a driver's cabin (15) and that supports a timber-receiving unit (11) at the free end of a second crane arm (10) that is arranged to be displaceable, which timber-receiving unit is intended for the reception and management of tree trunks, and which second vehicle furthermore supports a load compartment (12) for the transport of tree trunks,
c) coupling means (14) with which the second vehicle (1B) can be coupled to the first vehicle (1A),
d) a loading system including the second crane arm (10) and the timber-receiving unit (11), which allows, through the second crane arm (10) being arranged such that it reaches into the practical working area (17), the timber-receiving unit (11) to receive and carry in a retaining manner timber directly from the working area of the harvester unit (3) and, independently of the movement of the harvester unit (3), carry out by the second crane arm (10) the displacement of timber, which is transferred from the harvester unit (3) within the practical working area (17), to a position in and above the load compartment (12).

2. The system according to claim 1, whereby the coupling means (14) is arranged to form any one of the following means; a mechanical jointed coupling that allows the second vehicle (1B) to be coupled to and drawn after the first vehicle (1A) as a trailer or as a follower vehicle; a communication link (16) that allows the wireless transfer of data between operating means in the form of joysticks and similar used by an operator in the driver's cabin (15) in the first vehicle (1A) and a control computer in the second vehicle (1B) that makes it possible to control the second vehicle (1B) remotely by remote control equipment when it has been mechanically released; or a combination of these two means.

3. The system according to claim 2, whereby the second vehicle (1B) can be driven and is equipped with the driving and control arrangements that are required for the purpose, which are arranged to be remotely controlled by the remote control equipment by an operator in the first vehicle (1A) over the communication link (16).

4. The system according to claim 3, whereby the timber-receiving unit (11) is intended to be manoeuvred to the location of the working area of the harvester unit (3) in order to receive directly from the harvester unit (3) delivered timber, through the operation of the crane (10) or through the second vehicle (1B) being displaced to the location independently of the first vehicle (1A).

5. The system according to any one of claims 3-4, whereby the second vehicle (1B) is arranged to transmit video data, in the form of video streams, from one or several video cameras (18) arranged at the second vehicle (1B) to the remote control equipment, which video streams are presented to an operator in the first vehicle (1A) on one or several displays in the driver's cabin (15), and whereby the operator controls the second vehicle with the aid of the images.

6. The system according to claim 1, whereby each one of the vehicles (1A, 1B) that are components of the vehicle combination comprises a computer-supported reception and processing arrangement that is a component of the remote control equipment and that uses a satellite-based positioning system GPS, which is arranged in the condition in which the vehicle combination has been mechanically released to allow the second vehicle (1B) to move at a determined distance after or at a freely chosen position behind, or at another freely chosen position in the close vicinity of the first vehicle (1A).

7. A method for the processing and transport of forestry material such as tree trunks with a system according to claims 1-6 in which a mobile load compartment (12) is included, comprising the following steps:
a) that a felled tree is cross-cut and sawn to timber by means of a harvester unit (3) that is a component of the first vehicle (1A);
b) that a timber-receiving unit (11) that is a component of the second vehicle (1B) is placed at a location within the practical working area (17) of the harvester unit (3) during the felling of trees;
c) that the timber is fed out from the harvester unit (3) to the timber-receiving unit (11) arranged within the working area (17);
and
d) that the timber-receiving unit (11) is displaced from the practical working area during the felling of trees to a position from which the timber can be placed or be tipped into load compartment (12) that is a component of the second vehicle (1B); and
e) that the displacement of the timber-receiving unit (11) away from the practical working area (17) during the felling of trees to the mobile load compartment (12) takes place independently of the harvester unit (3).

8. The method according to claim 7, whereby several second vehicles (1B) are used, each one of which is placed at a position within the practical working area (17) during the felling of trees by the harvester unit (3) and that felled forestry material is collected from the practical working area and sorted for delivery into a load compartment (12) that is a component of each one of the said second vehicles, where this load compartment is selected with respect to the quality or dimension of the forestry material.

## Patentansprüche

1. System zur Verarbeitung und zum Transport von Forstmaterial wie beispielsweise Baumstämme mittels Fahrzeuge (1A, 1B) wie beispielsweise Forstmaschinen, die im Gelände getrieben werden können, und wo das Material nach der Ernte, die Fällen und Querschneiden von auf Wurzeln stehenden Bäumen umfasst, ohne Zwischenstufen vom Fällungsort (5) zu einem zentralen Ablageplatz (6) transportiert werden soll, wo das Forstmaterial zu einem Holzlager (4) geliefert werden soll, das sich in Verbindung mit einer Straße befindet, zum weiteren Transport mit beispielsweise Lastkraftwagen zu den Verbrauchern, wobei das System eine Fahrzeugkombination umfasst, die aus Folgendem besteht:
a) ein erstes Fahrzeug (1A), das getrieben werden kann und mit einer Fahrerkabine (15) ausgestattet ist und eine Ernteeinheit (3) an einem freien Ende eines ersten Kranarms (2) unterstützt, welcher dafür eingerichtet ist, verlagerbar zu sein, welche Ernteeinheit durch Manövrieren des ersten Kranarms (2) innerhalb eines praktischen Arbeitsbereichs (17) eines definierten Arbeitsgebiets während des Fällens von Bäumen Erntearbeit ausführen kann,
b) ein zweites Fahrzeug (1B), das keine Fahrerkabine (15) aufzeigt und eine holzaufnehmende Einheit (11) am freien Ende eines zweiten Kranarms (10) unterstützt, welcher dafür eingerichtet ist, verlagerbar zu sein, welche holzaufnehmende Einheit zur Aufnahme und Handhabung von Baumstämmen vorgesehen ist, und welches zweite Fahrzeug weiter einen Laderaum (12) zum Transport von Baumstämmen unterstützt,
c) Kopplungsmittel (14) womit das zweite Fahrzeug (1B) an das erste Fahrzeug (1A) gekoppelt werden kann,
d) ein Ladesystem mit dem zweiten Kranarm (10) und der holzaufnehmenden Einheit (11), welches es durch den zweiten Kranarm (10), der so angeordnet ist, dass er in den praktischen Arbeitsbereich (17) reicht, ermöglicht, dass die holzaufnehmende Einheit (11) auf festhaltende Art und Weise Holz direkt vom Arbeitsbereich der Ernteeinheit (3) aufnehmen und tragen kann und, unabhängig von der Bewegung der Ernteeinheit (3), durch den zweiten Kranarm (10) die Verlagerung von Holz, das von der Ernteeinheit (3) innerhalb des praktischen Arbeitsbereichs (17) zu einer Position in und oberhalb des Laderaums (12) übertragen wird, ausführen kann.

2. System nach Anspruch 1, wobei das Kopplungsmittel (14) dafür eingerichtet ist, eines der folgenden Mittel zu bilden; eine mechanische Gelenkkopplung, die es ermöglicht, dass das zweite Fahrzeug (1B) an das erste Fahrzeug (1A) gekoppelt und als Anhänger oder Folgefahrzeug nach diesem gezogen werden kann; eine Kommunikationsverbindung (16), die drahtlose Übertragung von Daten zwischen Bedienmitteln in Form von Joysticks und ähnlichem, die von einem Bediener in der Fahrerkabine (15) im ersten Fahrzeug (1A) benutzt werden, ermöglicht, und einen Steuercomputer im zweiten Fahrzeug (1B), der es ermöglicht, das zweite Fahrzeug (1B) durch Fernsteuerungsausrüstung fernzusteuern, wenn es mechanisch freigegeben worden ist; oder eine Kombination von diesen zwei Mitteln.

3. System nach Anspruch 2, wobei das zweite Fahrzeug (1B) getrieben werden kann und mit den Antriebs- und Steueranordnungen, die für den Zweck erforderlich sind, versehen ist, welche dafür eingerichtet sind, durch die Fernsteuerungsausrüstung durch einen Bediener im ersten Fahrzeug (1A) über die Kommunikationsverbindung (16) ferngesteuert zu werden.

4. System nach Anspruch 3, wobei die holzaufnehmende Einheit (11) dafür vorgesehen ist, zum Standort des Arbeitsbereichs der Ernteeinheit (3) manövriert zu werden, um durch Bedienung des Krans (10) oder durch das zweite Fahrzeug (1B), das unabhängig vom ersten Fahrzeug (1A) zum Standort verlagert wird, direkt von der Ernteeinheit (3) geliefertes Holz aufzunehmen.

5. System nach einem der Ansprüche 3-4, wobei das zweite Fahrzeug (1B) dafür eingerichtet ist, Videodaten in Form von Videoströmen von einer oder mehreren Videokameras (18), die am zweiten Fahrzeug (1B) angeordnet sind, zur Fernsteuerungsausrüstung zu übertragen, welche Videoströme einem Bediener im ersten Fahrzeug (1A) auf einem oder mehreren Displays in der Fahrerkabine (15) angezeigt werden, und wobei der Bediener das zweite Fahrzeug mit Hilfe von den Bildern steuert.

6. System nach Anspruch 1, wobei jedes der Fahrzeuge (1A, 1B), die Bestandteile der Fahrzeugkombination sind, eine computerunterstützte Empfangs- und Verarbeitungsanordnung umfasst, die ein Bestandteil der Fernsteuerungsausrüstung ist und satellitenbasiertes Positionierungssystem GPS anwendet, das in dem Zustand, wo die Fahrzeugkombination mechanisch freigegeben worden ist, dafür eingerichtet ist, dem zweiten Fahrzeug (1B) es zu ermöglichen, sich in einem vorbestimmten Abstand nach oder in einer frei wählbaren Position hinter oder in einer anderen frei wählbaren Position in der Nähe des ersten Fahrzeugs (1A) zu bewegen.

7. Verfahren zur Verarbeitung und zum Transport von Forstmaterial wie beispielsweise Baumstämme mit einem System nach Anspruch 1-6, worin ein mobiler Laderaum (12) enthalten ist, umfassend die folgenden Schritte:
a) dass ein gefällter Baum mittels einer Ernteeinheit (3), die ein Bestandteil des ersten Fahrzeugs (1A) ist, quergeschnitten und zu Holz gesägt wird;
b) dass eine holzaufnehmende Einheit (11), die ein Bestandteil des zweiten Fahrzeugs (1B) ist, an einem Standort innerhalb des praktischen Arbeitsbereichs (17) der Ernteeinheit (3) während des Fällens von Bäumen angeordnet wird;
c) dass das Holz von der Ernteeinheit (3) zur holzaufnehmenden Einheit (11), die innerhalb des Arbeitsbereichs (17) angeordnet ist, ausgestoßen wird;
und
d) dass die holzaufnehmende Einheit (11) vom praktischen Arbeitsbereich während des Fällens von Bäumen zu einer Position verlagert wird, wovon das Holz platziert oder in den Laderaum (12) gekippt werden kann, der ein Bestandteil des zweiten Fahrzeugs (1B) ist; und
e) dass die Verlagerung der holzaufnehmenden Einheit (11) weg vom praktischen Arbeitsbereich (17) während des Fällens von Bäumen zum mobilen Laderaum (12) unabhängig von der Ernteeinheit (3) erfolgt.

8. Verfahren nach Anspruch 7, wobei mehrere zweite Fahrzeuge (1B) verwendet werden, wobei jedes Fahrzeug in einer Position innerhalb des praktischen Arbeitsbereichs (17) während des Fällens von Bäumen durch die Ernteeinheit (3) angeordnet ist, und dass gefälltes Forstmaterial vom praktischen Arbeitsbereich eingesammelt und sortiert wird zur Abgabe in den Laderaum (12), der ein Bestandteil von jedem der zweiten Fahrzeuge ist, wobei dieser Laderaum bezüglich Qualität oder Abmessung des Forstmaterials ausgewählt wird.

## Revendications

1. Système de traitement et de transport de matériau d'exploitation forestière tel que des troncs d'arbres au moyen de véhicules (1A, 1B) tels que des engins forestiers pouvant être entraînés en terrain et dans lequel le matériel après récolte, qui comprend l'abattage et le tronçonnage d'arbres reposant sur des racines, est destiné à être transporté sans marches intermédiaires du site d'abattage (5) à une zone de stockage centrale (6) à laquelle le matériau d'exploitation forestière est destiné à être livré dans un magasin de bois (4) situé en relation avec une route pour son transport ultérieur avec, par exemple, des camions aux consommateurs, dans lequel le système comprend une combinaison de véhicules constituée par:
a) un premier véhicule (1A) qui peut être entraîné et qui est équipé d'une cabine de conduite (15) et qui supporte une unité de récolte (3) à une extrémité libre d'un premier bras de grue (2) qui est agencé pour être déplaçable, ladite unité de récolte pouvant, par manoeuvre du premier bras de grue (2), effectuer la récolte dans une zone travail pratique (17) d'un secteur de travail défini lors de l'abattage d'arbres,
b) un deuxième véhicule (1B) qui démontre l'absence d'une cabine de conduite (15) et qui supporte une unité de réception de bois (11) à l'extrémité libre d'un deuxième bras de grue (10) agencé pour être déplaçable, ladite unité de réception de bois étant destinée à la réception et à la gestion de troncs d'arbres, et ledit deuxième véhicule supportant en outre un compartiment de chargement (12) pour le transport de troncs d'arbres,
c) des moyens d'accouplement (14) avec lesquels le deuxième véhicule (1B) peut être couplé au premier véhicule (1A),
d) un système de chargement comprenant le deuxième bras de grue (10) et l'unité de réception de bois (11), qui permet, à travers le deuxième bras de grue (10) étant agencé si bien qu'il pénètre dans la zone de travail pratique (17), à l'unité de réception du bois (11) de recevoir et de transporter de manière fixe le bois directement depuis la zone de travail de l'unité de récolte (3) et, indépendamment du mouvement de l'unité de récolte (3), d'effectuer par le deuxième bras de grue (10) le déplacement de bois, qui est transféré de l'unité de récolte (3) dans la zone de travail pratique (17) à une position dans et au-dessus du compartiment de chargement (12).

2. Système selon la revendication 1, dans lequel le moyen de couplage (14) est agencé pour former l'un quelconque des moyens suivants ; un accouplement à articulation mécanique qui permet au deuxième véhicule (1B) d'être attelé au premier véhicule (1A) et tiré après celui-ci en tant que remorque ou en tant que véhicule suiveur ; un lien de communication (16) qui permet le transfert sans fil de données entre des moyens d'actionnement sous forme de manettes et similaires utilisés par un opérateur dans la cabine de conduite (15) dans le premier véhicule (1A) et un ordinateur de commande dans le deuxième véhicule (1B) qui permet de commander à distance le deuxième véhicule (1B) par un équipement de télécommande lorsqu'il a été libéré mécaniquement ; ou une combinaison de ces deux moyens.

3. Système selon la revendication 2, dans lequel le deuxième véhicule (1B) peut être entraîné et est équipé des dispositifs d'entraînement et de commande nécessaires à cet effet, qui sont agencés pour être commandés à distance par l'équipement de télécommande par un opérateur dans le premier véhicule (1A) sur le lien de communication (16).

4. Système selon la revendication 3, dans lequel l'unité de réception de bois (11) est destinée à être manoeuvrée à l'emplacement de la zone de travail de l'unité de récolte (3) pour recevoir du bois livré directement de l'unité de récolte (3) par le fonctionnement de la grue (10) ou par le biais du deuxième véhicule (1B) étant déplacé à l'emplacement indépendamment du premier véhicule (1A).

5. Système selon l'une quelconque des revendications 3 et 4, dans lequel le deuxième véhicule (1B) est agencé pour transmettre des données vidéo, sous la forme de flux vidéo, à partir d'une ou plusieurs caméras vidéo (18) disposées sur le deuxième véhicule (1B) à l'équipement de télécommande, lesdits flux vidéo étant présentés à un opérateur dans le premier véhicule (1A) sur un ou plusieurs affichages dans la cabine de conduite (15), et l'opérateur commandant le deuxième véhicule à l'aide des images.

6. Système selon la revendication 1, dans lequel chacun des véhicules (1A, 1B) qui sont des composants de la combinaison de véhicules comprend un dispositif de réception et de traitement assisté par ordinateur qui est un composant de l'équipement de télécommande et qui utilise un système de positionnement GPS par satellites, qui est agencé dans l'état dans lequel la combinaison de véhicules a été libérée mécaniquement pour permettre au deuxième véhicule (1B) de se déplacer à une distance déterminée après ou à une position librement choisie derrière, ou à une autre position librement choisie dans le proximité du premier véhicule (1A).

7. Procédé destiné au traitement et au transport de matériau d'exploitation forestière tel que des troncs d'arbres par un système selon les revendications 1 à 6 dans lequel est inclus un compartiment de chargement mobile (12), comprenant les étapes suivantes :
a) qu'un arbre abattu est tronçonné et scié en bois au moyen d'une unité de récolte (3) qui est un composant du premier véhicule (1A) ;
b) qu'une unité de réception de bois (11) qui est un composant du deuxième véhicule (1B) est placée à un endroit dans la zone de travail pratique (17) de l'unité de récolte (3) pendant l'abattage d'arbres ;
c) que le bois est évacué à partir de l'unité de récolte (3) vers l'unité de réception de bois (11) disposée dans la zone de travail (17) ;
et
d) que l'unité de réception du bois (11) est déplacée à partir de la zone de travail pratique pendant l'abattage des arbres vers une position à partir de laquelle le bois peut être placé ou être déversé dans le compartiment de chargement (12) qui est un composant du deuxième véhicule (1B) ; et
e) que le déplacement de l'unité de réception du bois (11) à l'écart de la zone de travail pratique (17) pendant l'abattage d'arbres vers le compartiment de chargement mobile (12) a lieu indépendamment de l'unité de récolte (3).

8. Procédé selon la revendication 7, dans lequel plusieurs deuxièmes véhicules (1B) sont utilisés, chacun d'eux étant placé à l'intérieur de la zone de travail pratique (17) pendant l'abattage des arbres par l'unité de récolte (3) et que du matériau d'exploitation forestière abattu est collecté à partir de la zone de travail pratique et trié pour être livré dans un compartiment de chargement (12) qui est un composant de chacun desdits deuxièmes véhicules, ce compartiment de chargement étant choisi en fonction de la qualité ou de la dimension du matériau d'exploitation forestière.
